# EUROPÄISCHE PATENTSCHRIFT

(11) **EP 3 402 616 B1**
(45) Veröffentlichungstag und Bekanntmachung des Hinweises auf die Patenterteilung: **18.10.2023**
(21) Anmeldenummer: 17701028.7
(22) Anmeldetag: 12.01.2017
(51) Int. Cl.: B21D 3/10, B21D 3/16, G01B 5/10

(54) **RICHTPRESSE UND VERFAHREN ZUM RICHTEN VON RUNDLAUF- ODER GERADHEITSFEHLERN AN LANG GESTRECKTEN WERKSTÜCKEN MIT MINDESTENS EINEM WENDELBEREICH, WIE AN FÖRDERSCHNECKEN, INSBESONDERE AN EXTRUDERSCHNECKEN**
STRAIGHTENING PRESS AND METHOD FOR STRAIGHTENING CONCENTRICITY OR STRAIGHTNESS ERRORS IN ELONGATED WORK PIECES HAVING AT LEAST ONE COIL REGION, SUCH AS IN SCREW CONVEYORS, IN PARTICULAR EXTRUDER SCREWS
PRESSE À DRESSER ET PROCÉDÉ DE DRESSAGE DE FAUX-RONDS OU DE DÉFAUTS DE RECTITUDE SUR DES PIÈCES DE FORME ALLONGÉE COMPORTANT AU MOINS UNE ZONE SPIRALÉE, COMME UNE VIS SANS FIN TRANSPORTEUSE, NOTAMMENT UNE VIS SANS FIN D'EXTRUDEUSE

(30) Priorität: 12.01.2016 DE 202016000094 U; 13.01.2016 DE 202016000142 U
(43) Veröffentlichungstag der Anmeldung: 21.11.2018
(73) Patentinhaber: M A E Maschinen- und Apparatebau Götzen GmbH, 40699 Erkrath (DE)
(72) Erfinder: MITZE, Manfred, 58300 Wetter (DE)
(74) Vertreter: Grosse Schumacher Knauer von Hirschhausen
(86) Internationale Anmeldenummer: PCT/EP2017/000032
(87) Internationale Veröffentlichungsnummer: WO 2017/121640

(56) Entgegenhaltungen:
- DE-A1- 2 452 435
- DE-A1- 4 022 951
- DE-A1- 4 432 317
- DE-A1- 4 444 787
- DE-A1-102007 051 903

## Beschreibung

### GEBIET DER ERFINDUNG

Die Erfindung betrifft eine Richtpresse zum Richten von Rundlauf- oder Geradheitsfehlern an lang gestreckten Werkstücken, die mindestens einen mindestens eine Wendel umfassenden Wendelbereich aufweisen, wie an Förderschnecken, insbesondere an Extruderschnecken, gemäß dem Oberbegriff von Anspruch 1, wie z.B. aus der DE 10 2007 051903 A bekannt, sowie eine Verwendung von entsprechenden Richtpressen gemäß Anspruch 18 und ein Verfahren zum Richten gemäß Anspruch 19. Die Richtpresse umfasst demnach Zentriermittel, zwischen denen ein Werkstück einspannbar ist respektive eingespannt ist. Die Richtpresse kann das Werkstück umfassen oder - ohne, dass das Werkstück umfasst ist, - zum Bearbeiten des Werkstücks geeignet sein. Die Richtpresse umfasst mindestens einen, Rundlauffehler des Werkstücks erfassenden Messkopf. Das Werkstück weist mindestens einen Wendelbereich auf, der mindestens eine Wendel umfasst und mindestens einen Kerndurchmesser und mindestens einen Außendurchmesser des Werkstücks definiert, wie es z. B. bei Förderschnecken, insbesondere bei Extruderschnecken der Fall ist.

### TECHNOLOGISCHER HINTERGRUND

Extruder sind Fördermaschinen nach dem Prinzip der Archimedischen Schraube, mit denen feste bis dickflüssige Medien unter hohem Druck und hoher Temperatur in ein formgebendes Werkzeug gepresst werden können. Je nach Einsatz werden Drücke bis 1500 bar bei Temperaturen bis 300°C und Drehzahlen bis 500 min⁻¹ erreicht. Extruderschnecken haben Durchmesser von etwa 20 mm bis etwa 400 mm, die Länge beträgt das 20- bis 40-fache des Durchmessers.

Wegen der durch die ständige Reibung hohen Beanspruchung der Förderschnecke wird sie aus hoch legierten Werkzeugstählen gefertigt und zusätzlich noch gehärtet oder mit einer Verschleißschicht überzogen (Panzerung). Dies führt häufig zu einem ungewollten Verzug der Schnecke. Für die korrekte Funktion des Extruders ist die Geradheit (Rundlauf) der Schnecke jedoch von großer Bedeutung. Hat die Förderschnecke einen nennenswerten Rundlauffehler, so ist einerseits mit einer hohen Leckage und/oder hohem Verschleiß am Dichtspalt zum Zylinder zu rechnen. Ein Taumeln des Schneckenkerns erzeugt andererseits Unstetigkeiten des Förderstroms. Können die Rundlauffehler beim Außendurchmesser der Wendel etwa durch Nachschleifen noch relativ einfach beseitigt werden, so ist eine Korrektur am Kern etwa durch zerspanende Verfahren sehr aufwändig. Gängige Praxis ist daher eine Beseitigung des Fehlers durch einen Biege-Richtprozess mit integrierter Messtechnik. Dazu wird die Schnecke beidseitig in Zentrierspitzen eingespannt, die auch die Messbasis bilden. Zur Feststellung des Rundlaufs erfolgt eine vollständige Drehung der Schnecke in den Spitzen unter gleichzeitiger Beobachtung des Messuhrausschlags. Bei Vernachlässigung von Oberflächen-Formfehlern auf der Werkstückoberfläche errechnet sich der Rundlauffehler als Differenz zwischen größtem und kleinstem Anzeigewert der Messuhr. Übliche Rundlauf-Toleranzen für Extruderschnecken liegen je nach Länge zwischen 0,03 mm und 0,2 mm.

Kritisch bei der Messung des Kerns einer Extruderschnecke ist die unvermeidliche Kollision des Messfühlers mit der Schneckenwendel bei der Drehung der Schnecke. Zur Verhinderung einer Beschädigung der Messuhr wäre es natürlich möglich, die Position der Uhr während der Messung entsprechend der Schneckensteigung in Pfeilrichtung zu verschieben. Dies erfordert jedoch ein entsprechendes Geschick des Bedieners oder eine aufwändige Verschiebevorrichtung, die die Messuhrposition der Winkelstellung der Spindel entsprechend selbsttätig nachführt. Spindeln werden in der Praxis bislang meist in kleinen Serien und im manuellen Prozess gerichtet. Wegen der geschilderten Kollisions-Problematik wird dazu im Regelfall eine Messtechnik eingesetzt, die mit Hilfe eines drehbaren Balkens die Oberfläche der Schneckenwendel abtastet. Dies hat allerdings den Nachteil, dass die eigentlich wichtigere Kernoberfläche nicht gemessen wird. Vielmehr geht man davon aus, dass bei einer ausreichend genau gerichteten Wendel auch der Rundlauffehler des Kerns innerhalb der geforderten Grenzen liegt .Nachteilig ist zudem die große räumliche Ausdehnung der Messhebel. Ein Messen der Spindelenden ist wegen des dann abkippenden Hebels nicht möglich. Zudem ist für unterschiedliche Steigungen ein Austausch des Hebels erforderlich.

Die Fertigungsstückzahlen von Extruderschnecken sind im Zuge der größeren Verbreitung von Kunststoff-Spritzmaschinen in den letzten Jahren kontinuierlich gestiegen. Dies und auch die Forderungen nach dokumentierten Fertigungsprozessen führen zu dem zunehmenden Wunsch der Schneckenhersteller, den Mess- und Richtprozess mit automatisch arbeitenden Anlagen auszuführen. Einsetzbar sind beispielsweise die im Prinzip bekannten Richtmaschinen gemäß der Anmeldung EP 93 911735.4 für kürzere oder gemäß der Anmeldung DE 101 44 135 für langgestreckte Bauteile. Ausgeführte automatische Richtanlagen für Extruderschnecken messen und richten jedoch weiterhin nur den Wendel-Außendurchmesser.

Wenn der Kernbereich z.B. einer Extruderschnecke mit relativ großem Vorschub z.B. durch ein Fräsverfahren hergestellt wurde, können Fräsrillen mit einem spiraligen Verlauf entstehen. Dann kann der Kern-Rundlauf bei ortsfester Achsialposition des Messkopfes nicht korrekt erfasst werden. Es wurde festgestellt, dass der Kern-Rundlauf nur dann korrekt gemessen wird, wenn der Messpunkt einen gleichbleibenden Abstand zu einer benachbarten Wendel hat.

Wünschenswert ist demnach eine verbesserte, insbesondere automatische Richtanlage, die ein prozesssicheres Messen und Richten des Schneckenkerns auch dann gestattet, wenn der Kernbereich des Werkstücks, wie z.B. einer Extruderschnecke, Unregelmäßigkeiten, wie Fräsrillen mit einem spiraligen Verlauf aufweist.

Unabhängig davon kann es erwünscht sein, die Messung des Wendel-Außendurchmessers optional weiterhin zu ermöglich. Zusätzliche Entwicklungsziele können in Anbetracht der geringen Fertigungslose ein geringer Umrüstaufwand sowie aus Funktionsgründen das Messen bis zum Wendelende sein.

### DARSTELLUNG DER ERFINDUNG

Der Erfindung liegt das Problem zugrunde, Rundlauffehler an Extruderschnecken und anderen mit Außenwendeln versehenen länglichen Werkstücken zu beseitigen. Zur Lösung dieser Aufgabe wird eine Richtpresse mit den Merkmalen des Anspruchs 1 vorgeschlagen. Demnach sieht die Erfindung vor, dass bei einer gattungsgemäßen Richtpresse eine etwa parallel zur Achse des zwischen den Zentrierspitzen eingespannten Werkstücks angeordnete Führungsschiene vorgesehen ist. Der mindestens eine Messkopf umfasst Mittel zu dessen Verfahrbarkeit (Verfahrbarkeitsmittel) entlang der Führungsschiene. Der mindestens eine Messkopf und/oder sein Verfahrbarkeitsmittel umfasst/umfassen mindestens ein Steuermittel. Das Steuermittel ist zum Einhalten eines festen Abstandes zwischen der Wendel und dem Messpunkt auf dem Werkstückkern während dessen Drehung ausgestaltet.

Außerdem sieht die Erfindung vor, dass der mindestens eine verfahrbare Messkopf eine weitere Messeinrichtung aufweist, die im, vorzugsweise festen, Abstand von dem Messpunkt auf dem Werkstückkern den Außendurchmesser der Wendel erfasst.

Rundlauffehler an Extruderschnecken und anderen mit Außenwendeln versehenen länglichen Werkstücken können ferner mit einer Vorrichtung mit den Merkmalen des Anspruchs 10, 11 oder 12 beseitigt werden. Demnach sieht Anspruch 10 vor, dass mindestens zwei im Bereich zwischen den Zentriermitteln des Werkstücks angeordnete, berührend oder berührungslos wirksame Abstandsmesser vorgesehen sind. Die Abstandsmesser erfassen die Abstände von Oberflächen des Werkstücks von mindestens einem Referenzpunkt aus. Die Messpunkte am Werkstück sind für die mindestens zwei Abstandsmesser in Achsrichtung des Werkstücks in einem, vorzugsweise festen, Abstand voneinander angeordnet. Der axiale Abstand der mindestens zwei Messpunkte voneinander ist kleiner ist als die Steigung der jeweiligen Wendel und größer als die in Achsrichtung gesehene Breite der jeweiligen einen Wendel.

Es ist auch möglich bei einer Richtpresse nach Anspruch 11 einen berührend wirksamen Abstandsmesser vorzusehen. Der mindestens eine, Rundlauffehler des Werkstücks erfassende Messkopf weist einen Messfühler (nachfolgend auch als Taster bezeichnet) auf, der während einer Wendelbewegung nacheinander zumindest mit einem Kernbereich, einem etwaigen Übergangsbereich und einem Wendelbereich an mindestens je einer Werkstück-Kontaktfläche in Anlage gehalten ist. Der mindestens eine Messfühler weist eine Gleitflächen definierende Kontur auf, deren Ausrichtung und Neigung sein Übersteigen (nachfolgend auch als Überklettern bezeichnet) der Wendel beim Kontakt mit den Werkstück-Kontaktflächen während der Wendelbewegung gestattet.

Des Weiteren ist es möglich, den Abstandsmesser bei einer Richtpresse nach Anspruch 12 mit einem oder mehreren berührend wirksamen Abstandsmesser derart zu versehen, dass der mindestens eine Messfühler bei seiner Annäherung an die Wendel oder bei deren Erreichen kraftbetätigt von der Kontaktfläche abhebbar und auf der gegenüberliegenden Wendelseite wieder auf den Kernbereich aufsetzbar ist. Es reicht an sich, wenn nur der Messfühler als solcher kraftbetätigt abhebbar und aufsetzbar ist; aber es ist ebenso im Sinne der Erfindung, wenn der ganze Messkopf in solcher Weise betätigbar ist.

Rundlauffehler an Extruderschnecken und anderen mit Außenwendeln versehenen länglichen Werkstücken können ferner mit einer Verwendung einer Richtpresse zum Richten von Rundlauf- oder Geradheitsfehlern an einem lang gestreckten Werkstück nach Anspruch 18 beseitigt werden. Das Werkstück weist mindestens einen, mindestens einen Kerndurchmesser und mindestens einen Außendurchmesser des Werkstücks definierenden, mindestens eine Wendel umfassenden Wendelbereich auf. Zum Richten wird erfindungsgemäß eine Vorrichtung verwendet, die hierin beschriebene Merkmale aufweist.

Rundlauffehler an Extruderschnecken und anderen mit Außenwendeln versehenen länglichen Werkstücken können ferner mit einem Verfahren zum Richten eines Werkstücks nach Anspruch 19 beseitigt werden. Das Verfahren dient dem Richten von Rundlauf- oder Geradheitsfehlern an einem lang gestreckten Werkstück, welches mindestens einen, mindestens einen Kerndurchmesser und mindestens einen Außendurchmesser des Werkstücks definierenden, mindestens eine Wendel umfassenden Wendelbereich aufweist. Das Werkstück wird in einem ersten Verfahrensschritt zentriert. Die Geometrie der Wendel des Werkstücks wird in einem weiteren Verfahrensschritt durch Abtasten des Werkstücks mittels zumindest eines in zumindest einer Führungsschiene verfahrbaren Messkopfes erfasst. Mittels eines Steuermittels zum Steuern des verfahrbaren Messkopfes oder zum Steuern eines den Messkopf verfahrenden Verfahrarkeitsmittels wird ein fester Abstand zwischen Wendel und Messpunkt auf dem Werkstückkern während einer Drehung des Werkstücks eingehalten. Alternativ kann das Richt-Verfahren so gestaltet sein, dass mindestens zwei im Bereich zwischen den Zentriermitteln des Werkstücks angeordnete, berührend oder berührungslos wirksame Abstandsmesser die Abstände von Oberflächen des Werkstücks von mindestens einem Referenzpunkt erfassen, wobei der axiale Abstand der mindestens zwei Messpunkte voneinander kleiner ist als die Steigung der jeweiligen Wendel und größer ist als die in Achsrichtung gesehene Breite der jeweiligen einen Wendel.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung, in der - beispielhaft - Ausführungsbeispiele erfindungsgemäßer Richtpressen dargestellt sind.

### KURBESCHREIBUNG DER FIGUREN

In der Zeichnung zeigen:
- Fig.1: eine Richtpresse in schematischer Darstellung mit einem motorisch axial verfahrbaren Messkopf mit konstantem Abstand "x" zur Wendel in Seitenansicht;
- Fig.2: eine alternative Ausführung einer Richtpresse in schematischer Darstellung mit mechanisch gekoppeltem, mit konstantem Abstand "x" zur Wendel geführten, axial verfahrbarem Messkopf;
- Fig.3: eine weitere alternative Ausführung einer Richtpresse in schematischer Darstellung mit zusätzlichem Messhebel zur zusätzlichen Messung des Wendelaußendurchmessers;
- Fig.4: Vektor-Zusammenhang der Rundlauffehler von Werkstückkern und Wendelaußendurchmesser;
- Fig.5A/B: von einer Richtpresse nach Fig.1, 2 oder 3 ein alternativer Abstandsmesser mit Messfühler mit Anlaufschrägen in Seitenansicht und Draufsicht;
- Fig. 6: eine alternative Ausführungsform zu den Richtpressen nach Figuren 1 bis 3;
- Fig.7: eine Richtpresse in schematischer Darstellung mit einem eine sich drehende Extruderschnecke berührenden Doppel-Messtaster zur Vermeidung einer Austastlücke in Seitenansicht;
- Fig.8: einen typischen Signalverlauf bei einer 360°-Drehung einer Extruderschnecke der Richtpresse nach Fig.7 oder Fig.10A/B;
- Fig.9: den Doppel-Messtaster nach Fig.7 mit zusätzlichem Messhebel zur zusätzlichen Messung der Wendel;
- Fig.10A/B: eine zweite Richtpresse in schmatischer Darstellung mit einem eine sich dre-. hende Extruderschnecke berührenden Einzel-Messtaster in Seitenansicht; sowie
- Fig.11A/B: von der Richtpresse nach Fig.10 ein vergrößert dargestellter Messkopf mit Messtaster mit Anlaufschrägen in Seitenansicht und Draufsicht.

### DETAILLIERTE BESCHREIBUNG DER AUSFÜHRUNGSBEISPIELE

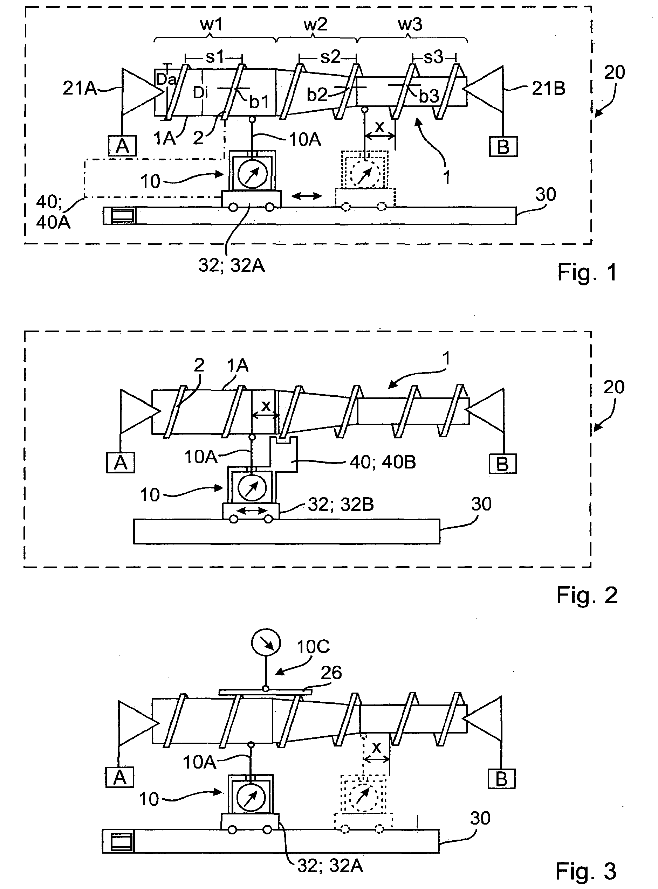

Figur 1 zeigt eine Richtpresse 20 zum Richten von Rundlauf- oder Geradheitsfehlern an lang gestreckten Werkstücken 1 umfassend Zentriermittel 21A, 21B und das zwischen den Zentriermitteln eingespanntes Werkstück 1. Das Werkstück 1, das, wie dargestellt und insoweit bevorzugt, eine Förder-, insbesondere Extruderschnecke sein kann, weist mindestens einen, mindestens einen Kerndurchmesser Di und mindestens einen Außendurchmesser Da des Werkstücks definierenden, mindestens eine Wendel 2 umfassenden Wendelbereich W1, W2, W3 auf. Mindestens ein, Rundlauffehler des Werkstücks erfassender Messkopf 10 gestattet Abstandsmessungen zwischen der/den Oberfläche/n des Werkstückskerns 1A und einer Referenzbasis. Eine etwa parallel zur Achse des zwischen den Zentrierspitzen 21A, 21B eingespannten Werkstücks 1 angeordnete Führungsschiene 30, wie eine Linearschiene, und ein Mittel 32; 32A, 32B zur Verfahrbarkeit des Messkopfes 10, wie ein motorisch angetriebener Führungswagen 32A oder ein von der Wendel 2 verschiebbarer Führungsschlitten 32B, gestatten ein achsparalleles Verfahren des mindestens einen Messkopfes 10 entlang der Führungsschiene 30. Die Führungsschiene 30 kann als Referenzbasis für die Abstandsmessung dienen. Dem Messkopf 10 und/oder seinem Verfahrbarkeitsmittel 32 ist mindestens ein Steuermittel 40; 40A, 40B zugeordnet, das zum Einhalten eines festen Abstandes "x" zwischen der Wendel 2 und dem Messpunkt auf dem Werkstückkern 1A während der Drehung des Werkstücks um seine Längsachse ausgestaltet ist. Das Steuermittel 40 kann z.B. ein als elektrische Folgeschaltung wirkender Synchronisator 40A zwischen dem motorischen Drehantrieb der Wendel 2 und einem motorischen, linearen Antrieb des Führungswagens 32A sein, wie z.B. nach Figur 1. Alternativ kommt als Steuermittel eine mechanische Folgeanordnung 40B in Betracht, wie z.B. eine zwischen der motorisch angetriebenen Wendel 2 und einem entlang der Führungsschiene 30 verschiebbaren Führungsschlitten 32B wirksame Mitnehmerklaue, wie z.B. nach Figur 2.

Die Betriebsweise ist folgende: Vor Beginn des eigentlichen Richtvorgangs wird der die etwaigen Rundlauffehler des Werkstücks 1 erfassende Messkopf 10 über die gesamte relevante Länge des sich drehenden Werkstücks 1 hinweg so verfahren, dass der Abstand x zu einer benachbarten Wendel 2 mittels eines als elektrische Folgeschaltung wirkenden Synchronisators 40A konstant bleibt (Figur 1). Die Längsbewegung kann z.B. mit etwa einem entsprechend geregelten eigenen Vorschubantrieb für den Führungswagen 32A erfolgen; hierbei kann es sich z.B. elektrischen, pneumatisch oder hydraulischen Antrieb handeln, der entweder direkt am Führungswagen 32A vorgesehen ist oder mittels eines Übertragungselementes den Führungswagen 32A antreibt, z.B. eine Antriebsspindel. Bei der Alternative nach Figur 2 entfällt der eigene Vorschubantrieb. Stattdessen ist eine gleitfähige mechanische Ankopplung des Führungsschlittens 32B an die Wendel 2 des Werkstücks 1, z.B. mittels einer an der Wendel 2 angreifenden Mitnehmerklaue vorgesehen.

Durch die spiralige, berührungslose oder berührende Abstandserfassung des Werkstücckerns 1A von einer Referenzposition oder -basis aus, wie von der Führungsschiene 30, kann der Kernrundlauf-Vektor für jede Wendelsteigung s1, s2, s3 nach Betrag und Richtung bestimmt werden.

Für den eigentlichen Richtvorgang wäre eine solche abfahrende Messung oftmals zu zeitintensiv. Daher werden ergänzend zu dem abfahrenden Messkopf 10 gewünschtenfalls noch ein oder mehrere, vorzugsweise - wie dargestellt - stationäre Messeinrichtungen 10C mit Messbalken 26 nach Figur 3 installiert, die den Spindelrundlauf wie gewohnt auf der radialen Wendelaußenseite (Außendurchmesser Da des Werkstücks 1) abtasten. Damit ist es möglich, den Wendel-Rundlauf am Außendurchmesser der Wendel mit dem/den zusätzlichen Messbalken 26 zu erfassen. Der insoweit in Figur 3 gezeigte als Taster dienende Messhebel oder -balken 26 zur Erfassung des Wendelrundlaufs kann natürlich auch mit anderen Lösungen zur Vermessung des Kerns kombiniert werden.

Da die Wendel 2 ihre Position relativ zum Kern beim Richten nicht verändert, reicht es aus, die Vektordifferenz Kernrundlauf - Wendelrundlauf einmalig zu bestimmen. Der aktuelle Wendelrundlauf-Vektor wird dann beim Richtvorgang ständig durch eine 360°-Drehung des Werkstücks verfolgt. Mit einer Vektoraddition kann aus dem Wendelrundlauf- und dem Differenzvektor ständig der aktuelle Kernrundlauf ermittelt und damit auch gerichtet werden.

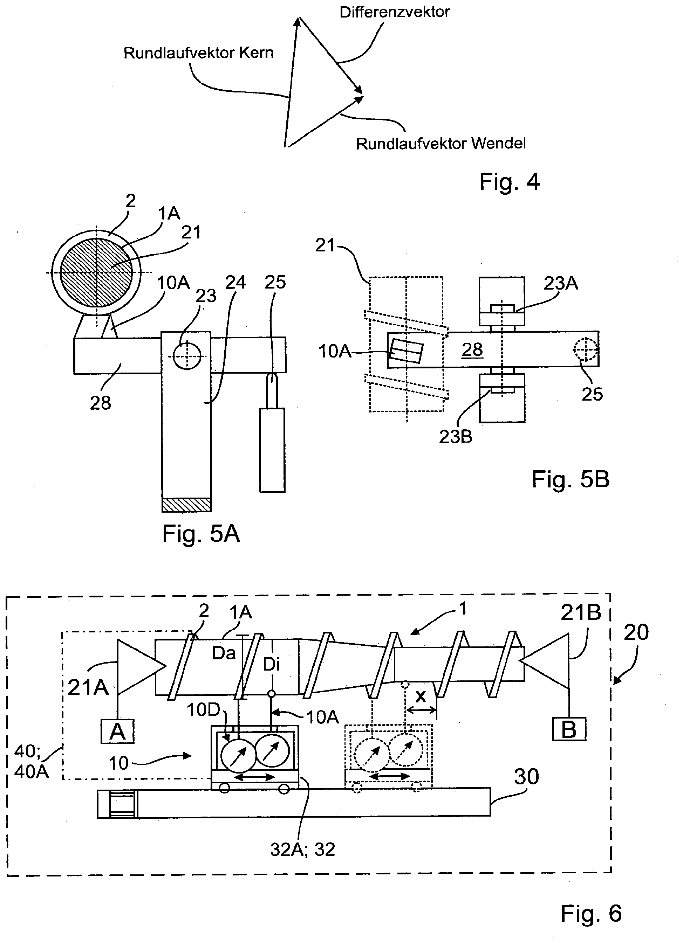

Gemäß der weiteren Ausführungsform mit eigenständig erfinderischer Bedeutung nach Figur 6 ist es alternativ oder kumulativ aber auch möglich, an dem mindestens einen Messkopf 10, insbesondere auf einem Führungswagen 32A oder auf einem Führungsschlitten 32B nach Fig. 1 oder Fig. 2 eine weitere Messeinrichtung 10D zu installieren. Sie verfährt in festem Abstand zu der den Kerndurchmesser Di messenden Messeinrichtung 10A oder 10B und kann den Außendurchmesser Da der Wendel 2 über deren gesamte Länge hinweg erfassen. So können Kern- und Wendelrundlauf während einer einzigen Messfahrt für beliebige Längspositionen erfasst werden.

Als Abstandsmesser des Messkopfes 10 kommen sowohl (taktile) Messfühler 10A als auch berührungsfrei wirkende, z.B. optische Messeinrichtungen 10B (nicht dargestellt) in Betracht, beispielesweise mit CCD-Kamerasensoren wie sie aus der DE 10 2007 051 903 oder der EP 2055403 B1 bekannt sind. Doch setzt derzeit die Kameratechnik noch enge Grenzen in hinsichtlich des akzeptablen Reflexionsgrads der Spindeln. Oftmals ist daher nur taktiles Messen möglich.

Einen möglichen (taktilen) Messfühler zeigt Figur 5A/B in der Seitenansicht und in der Draufsicht:
Der dachförmige Messfühler 10A ist passend zur Wendelsteigung der Extruderschnecke 21 schräg auf einem mit dem beidseitig abgestützten Drehgelenk 23 im Fuß 24 rotierbar gelagerten Hebel 28 fixiert. Der Fuß ist ortsfest mit der Maschine verbunden. Der elektrische Längsgeber 25 erfasst die Auslenkung des Tastkopfs und leitet das Signal an einen nicht dargestellten Auswerte- und Steuerrechner weiter.

Mit dem erfindungsgemäßen System ausgestattete Richtpressen können Spindel-Rundlauffehler also sowohl nach dem Kern wie auch nach dem Wendel-Außendurchmesser vermessen und richten.

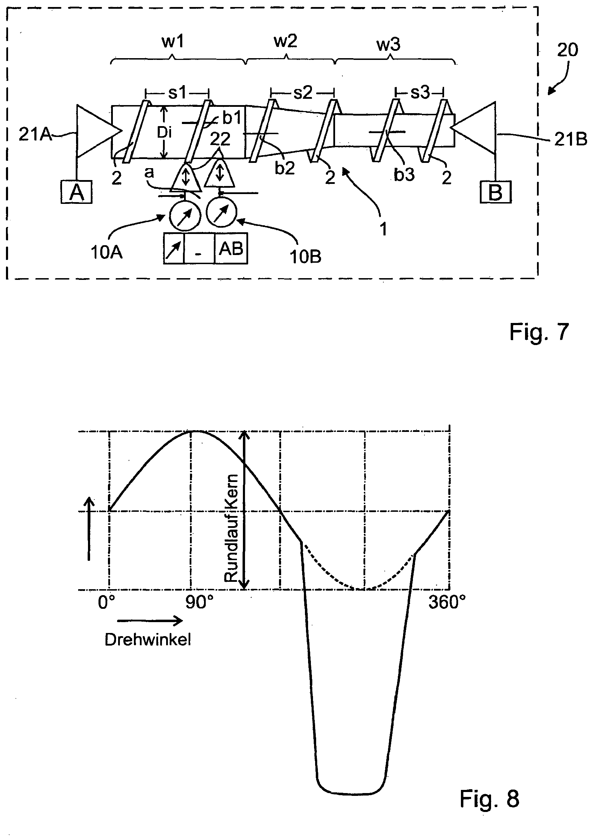

Den Nachteil der im Wendelbereich fehlenden Rundlaufsignale kann man durch zwei, z. B. um knapp eine halbe Spindelsteigung entfernt, aufgestellte Messtaster beseitigen. Figur 7 zeigt eine solche Anordnung für zwei Messköpfe (Abstandsmesser 10A und 10B). Durch den (axialen) Versatz der zwei Messköpfe um etwa die Hälfte der Steigung s1 der Wendel W1 ist stets mindestens ein Messpunkt auf dem Schneckenkern positioniert. Bei den Messköpfen kann es sich um berührungslos oder - wie beispielhaft dargestellt - berührend arbeitende handeln. In beiden Fällen geht je nach Schneckengeometrie sowie, bei einem berührend arbeitenden Messkopf, je nach der Geometrie des Messfühlers, ein Winkel von rund 70 bis 110° für die Messung des Kerndurchmessers Di verloren. Der fehlende Winkelbereich kann, grundsätzlich, durch einen Messrechner rechnerisch ergänzt werden, wie durch die gestrichelte Kurve in Figur 8 dargestellt, was jedoch weniger genau ist als eine "echte" Messung wie durch Ergänzung der Messsignale beider Messfühler. Eine entsprechende Steuerung ist bei einer Verwendung von zwei axial beabstandeten Abstandserfassungsorganen allerdings in der Lage, durch gezielte Auswertung des jeweils größten Messsignals ein virtuelles, über 360° reichendes Sinussignal für den Rundlauffehler zu bestimmen.

Die durchgezogene Kurve in Figur 8 zeigt den Signalverlauf des linken Messtasters nach Figur 7 über eine komplette Drehung von 360°. Der sinusartige Beginn gibt den Rundlauf des Kerns wieder, während der starke Abfall im hinteren Kurvenverlauf durch die Tasterauslenkung bei Übersteigen der Wendel verursacht wird. Stehen nun die Messpunkte von zwei berührungslos oder berührend arbeitenden Messorganen im Abstand von z.B. etwa der halben Steigung in Achsrichtung des Werkstücks nebeneinander, so kann der fehlende Kernmessbereich des einen Messorgans durch den entsprechenden, gestrichelt dargestellten Kernmessbereich des anderen Messorgans des benachbarten Tasters ersetzt werden. Damit kann der Rundlauf über die kompletten 360° dargestellt werden. Vorzugsweise sollte der axiale Abstand a der mindestens zwei Messpunkte voneinander kleiner ist als die Steigung s1, s2, s3 der jeweiligen Wendel W1, W2 oder W3 und größer ist als die in Achsrichtung gesehene Breite b1,b2, b3 der jeweiligen einen Wendel 2 sein.

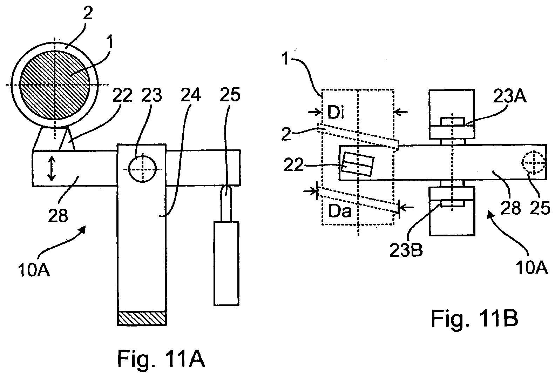

Verwendet man, wie dargestellt, eine berührende Abstandsmessung, so werden die Messfühler, vorzugsweise, jeweils mit einer besonderen Kontur und, vorzugsweise, auch mit einer besonderen, zur Aufnahme von Querkraft geeigneten Lagerung versehen. So können sie nach Berührung mit der Wendel beschädigungsfrei an der Flanke der Wendel hochlaufen und die Wendel übersteigen. Mögliche Konturen des Messfühlers sind beispielsweise eine Kugel entsprechenden Durchmessers oder z.B. die in Figur 11 skizzierte Fühlerform, insbesondere mit von der Seite aus betrachtet dreieckiger, von oben betrachtet, vorzugsweise dachartiger Grundform. Der Winkelbereich, in dem jeder Messfühler die Wendel überklettert, steht - wie auch bei einer berührungslosen Messung - nicht zur Auswertung des Rundlaufs des Schneckenkerns zur Verfügung.

Andererseits ist es bei Verwendung von zwei oder mehr Messorganen aber auch möglich, ein Übersteigen oder berührungsloses Erfassen der Wendeln zu vermeiden, indem die entlang des Werkstücks axial voneinander beabstandeten Messpunkte winkelversetzt zueinander, vorzugsweise an einander etwa gegenüberliegenden Seiten der Werkstücks, positioniert sind. Das Werkstück wird dann während der Abstandsmessung um weniger als 360 Grad so um die eigene Achse gedreht, sodass der Messpunkt die Wendel ausspart. Der minimale Drehwinkel des Werkstücks sollte mehr als 10, besser um mehr als 30, vorzugsweise mehr als 180 Grad betragen Der minimale Winkelversatz der Messpunkte sollte 10, besser 30 Grad, vorzugsweise aber 180 Grad betragen. Die sich ergänzenden Messsignale ergeben dann einen, vorzugsweise vollständigen, Umfangsverlauf des Kerndurchmessers Di des Werkstücks.

Gemäß einer weiteren, nicht dargestellten, Ausführungsform der Erfindung von eigenständiger Bedeutung kann der mindestens eine Messfühler die Wendel auch derart übersteigen, dass er bei Annäherung an die oder Erreichen der Wendel kraftbetätigt von der Kernoberfläche abgehoben und auf der anderen Wendelseite wieder auf die Kernoberfläche aufgesetzt wird, wenn das Werkstück entsprechend weit um seine Längsachse weitergedreht worden ist. Der Abhebe- und der Wiederaufsetzpunkt können z. B. messtechnisch oder nach einer vorbestimmten Zeit bestimmt werden. Hierzu kann beispielsweise ein Pneumatikzylinder mit zugehörender Erkennungseinrichtung der Wendelposition dienen.

Anstelle der taktilen Taster (Messfühler) können die stationären, d.h. in einer festen Axialposition durchgeführten Tastvorgänge, gemäß einer weiteren Ausführungsform der Erfindung, auch mit (nicht dargestellten) berührungsfrei wirkenden optischen Messeinrichtungen durchgeführt werden, wie aus der EP 2 055 403 B1 bekannt, beispielsweise mit CCD-Kamerasensoren. Dies hat Vorteile in Bezug auf die entfallende Kollisionsproblematik, doch setzt derzeit die Kameratechnik noch enge Grenzen in hinsichtlich des akzeptablen Reflexionsgrads der Spindeln. Oftmals ist daher nur taktiles Messen möglich.

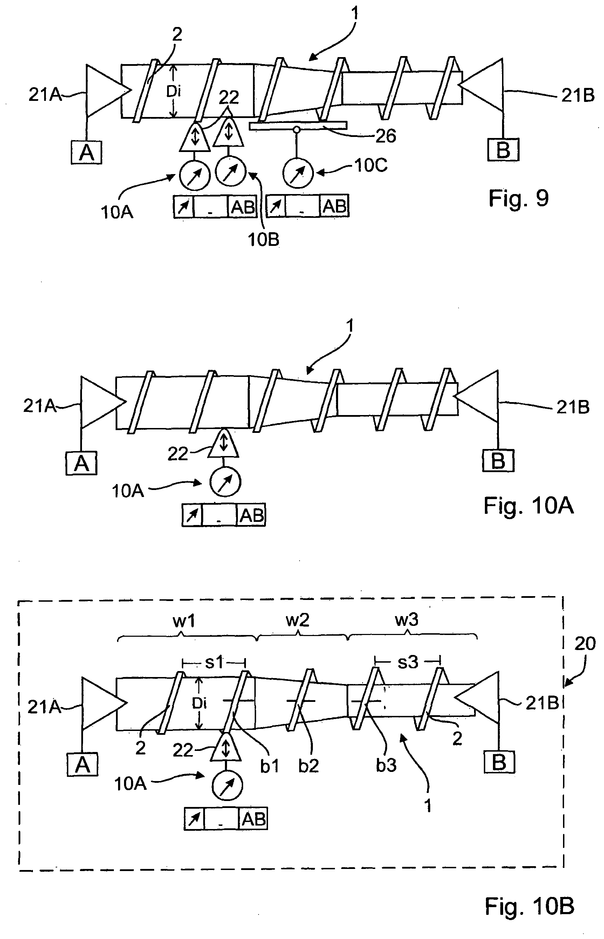

Ferner ist es möglich, den Wendel-Rundlauf am Außendurchmesser der Wendel mit einem zusätzlichen Messbalken zu erfassen. Der insoweit in Figur 9 gezeigte Messhebel oder - balken 26 eines weiteren Abstandsmessers 10C zur Erfassung des Wendelrundlaufs kann natürlich auch mit anderen Lösungen zur Vermessung des Kerns kombiniert werden, z.B. solchen mit nur einem einzigen Messkopf, wie in Figur 10A/B dargestellt.

Mit diesem System ausgestattete Richtpressen können Spindel-Rundlauffehler also sowohl nach dem Kern wie auch nach dem Wendel-Außendurchmesser vermessen und richten.

Bei einer alternativen Ausführungsform nach Figur 10A/B weist die Richtpresse einen einzigen taktilen Messkopf auf, dessen Messfühler für die Oberfläche der Extruderschnecke mit einer mindestens eine Gleitflächen definierenden Kontur versehen ist, deren Ausrichtung und Neigung sein Übersteigen der Wendel beim Kontakt mit den Werkstück-Kontaktflächen während der Wendelbewegung gestatten. Der Messtaster kann also nach Berührung mit der Wendel beschädigungsfrei an der Flanke hochlaufen. Solche Lösungen sind - auch mit mehreren Messköpfen - von eigenständig erfinderischer Bedeutung. Mögliche Konturen sind beispielsweise eine Kugel entsprechenden Durchmessers oder die in Figur 10A/B skizzierte Tasterform mit von der Seite aus betrachtet, vorzugsweise dreieckiger, von oben betrachtet vorzugsweise dachartiger Form.

Das so erhaltbare Messsignal kann z.B. den in Figur 8 mit durchgezogener Linie dargestellten Kurvenverlauf erzeugen. Eine mögliche Kontur für einen solchen Taster zeigt Figur 11 (A/B) in der Seitenansicht und in der Draufsicht:
Der dachförmige Messfühler 22 ist passend zur Wendelsteigung der Extruderschnecke 21 schräg auf einem mit dem beidseitig abgestützten Drehgelenk 23 im Fuß 24 rotierbar gelagerten Hebel 28 fixiert, die Lagerung ist zur Aufnahme von Querkräften geeignet. Der Fuß ist ortsfest mit der Maschine verbunden. Der elektrische Längsgeber 25 erfasst die Auslenkung des Tastkopfs und leitet das Signal an einen nicht dargestellten Auswerte- und Steüerrechner weiter. Dadurch wird eine zur Aufnahme von Querkraft beim Übersteigen der Wendeln geeignete Lagerung erreicht, die eine verbesserte Messgenauigkeit gestattet.

### BEZUGSZEICHENLISTE

- 1: Werkstück
- 1A: Werkstückkern
- 2: Wendel
- 10: Messkopf
- 10A: Messfühler (berührend wirkende Messeinrichtung) / Abstandsmesser
- 10B: berührungsfrei wirkende Messeinrichtung
- 10C: weitere Messeinrichtung
- 10D: mitfahrende Messeinrichtung
- 20: Richtpresse
- 21: Extruderschnecke
- 21A/B: Zentriermittel
- 22: Messfühler
- 23: Drehgelenk
- 24: Fuß
- 25: Längsgeber
- 26: Messbalken / Messhebel
- 28: Hebel
- 30: Führungsschiene
- 32: Verfahrbarkeitsmittel
- 32A: Führungswagen
- 32B: Führungsschlitten
- 40: Steuermittel
- 40A: Synchronisator
- 40B: mechanische Folgeanordnung

- a: Abstand
- x: Abstand
- Di: Kerndurchmesser
- Da: Außendurchmesser
- W1,W2,W3: Wendelbereiche
- s1, s2, s3: (Wendel)Steigung
- b1, b2, b3: Breite

## Patentansprüche

1. Richtpresse (20) zum Richten von Rundlauf- oder Geradheitsfehlern an lang gestreckten Werkstücken,
mit Zentriermitteln (21A, 21B), zwischen denen ein Werkstück (1) einspannbar ist, welches mindestens einen, mindestens einen Kerndurchmesser (Di) und mindestens einen Außendurchmesser (Da) des Werkstücks definierenden, mindestens eine Wendel (2) umfassenden Wendelbereich (W1, W2, W3) aufweist, wie eine Förderschnecke, insbesondere eine Extruderschnecke, und
mit mindestens einem, Rundlauffehler des Werkstücks erfassenden Messkopf,
wobei eine etwa parallel zur Achse des zwischen den Zentrierspitzen (21A, 21B) eingespannten Werkstücks (1) angeordnete Führungsschiene (30) vorgesehen ist und der mindestens eine Messkopf (10) Mittel (32; 32A, 32B) zu dessen Verfahrbarkeit entlang der Führungsschiene (30) aufweist,
**dadurch gekennzeichnet,**
**dass** der mindestens eine Messkopf (10) und/oder sein Verfahrbarkeitsmittel (32; 32A, 32B) mindestens ein Steuermittel (40; 40A. 40B) aufweist, das zum Einhalten eines festen Abstandes (x) zwischen der Wendel (2) und dem Messpunkt auf dem Werkstückkern (1A) während deren Drehung ausgestaltet ist, und
**dass** der mindestens eine verfahrbare Messkopf (10) eine weitere Messeinrichtung (10D) aufweist, die im, vorzugsweise festen, Abstand von dem Messpunkt auf dem Werkstückkern (1A) den Außendurchmesser (Da) der Wendel (2) erfasst.

2. Richtpresse nach Anspruch 1, **gekennzeichnet durch** einen motorisch angetriebener Führungswagen (32A) als Verfahrbarkeitsmittel (32) des Messkopfes (10), und/oder durch einen vom Werkstück, insbesondere von der Wendel (2), verschiebbaren Führungsschlitten (32B) als Verfahrbarkeitsmittel (32) des Messkopfes (10).

3. Richtpresse nach Anspruch 1 oder 2, **dadurch gekennzeichnet, dass** das Steuermittel (40) ein, z. B. als elektrische Folgeschaltung wirkender, Synchronisator (40A) ist, und/oder dass das Steuermittel (40) eine, insbesondere zwischen der motorisch angetriebenen Wendel (2) und einem entlang der Führungsschiene (30) verschiebbaren Führungsschlitten (32B) oder Führungswagen (32A) wirksame, mechanische Folgeanordnung (40B), wie eine Mitnehmerklaue ist.

4. Richtpresse nach einem der Ansprüche 1 bis 3, **dadurch gekennzeichnet, dass** ergänzend zu dem das Werkstück (1) abfahrenden Messkopf (10) ein, vorzugsweise stationärer, Abstandsmesser (Messeinrichtung, 10C) vorgesehen ist, der den Spindelrundlauf an dem radialen Außendurchmesser (Da) des Werkstücks (1) erfasst, wobei der Abstandsmesser vorzugsweise ein Messhebel oder -balken (26) zur Erfassung des Wendelrundlaufs ist.

5. Richtpresse nach Anspruch 4, **dadurch gekennzeichnet, dass** eine Einrichtung zum zumindest einmaligen Bestimmen der Vektordifferenz von Kernrundlauf und Wendelrundlauf vorgesehen ist.

6. Richtpresse nach Anspruch 4 oder 5, **dadurch gekennzeichnet, dass** eine Einrichtung zum Verfolgen des aktuellen Wendelrundlauf-Vektors vorgesehen ist, mit der der aktuelle Wendelrundlauf-Vektor beim Richtvorgang oder zwischen den Richtvorgängen, insbesondere ständig während der Drehung, insbesondere einer 360°-Drehung des Werkstücks (1), verfolgbar ist.

7. Richtpresse nach einem der Ansprüche 4 bis 6, **dadurch gekennzeichnet, dass** eine Einrichtung zum Ermitteln des aktuellen Kernrundlaufs mittels Vektoraddition aus dem Wendelrundlaufvektor und dem Differenzvektor vorgesehen ist, wobei die Einrichtung die Weitergabe der ermittelten aktuellen Kernrundlaufdaten für die Richtvorgänge gestattet.

8. Richtpresse nach einem der Ansprüche 1 bis 7, **dadurch gekennzeichnet, dass** der mindestens eine, Rundlauffehler des Werkstücks (1) erfassende Messkopf (10) einen Messfühler (10A, 22) aufweist, der, vorzugsweise, etwa prismenförmig ist, wobei die, insbesondere prismenförmige, Kontur des Messfühlers insbesondere zumindest abschnittsweise etwa parallel zur Wendel (2) des Werkstücks (1) orientiert ist, und/oder
dass der mindestens eine, Rundlauffehler des Werkstücks (1) erfassende Messkopf (10) einen Messfühler (10A/22) aufweist, der etwa parallel zur Wendel (2) des Werkstücks (1) orientiert ist.

9. Richtpresse nach einem der Ansprüche 1 bis 8, **dadurch gekennzeichnet, dass** der mindestens eine, insbesondere Rundlauffehler des Werkstücks (1) erfassende, Messkopf (10) einen Messfühler (10A/22) aufweist, der eine zur Aufnahme von Querkräften geeignete Lagerung aufweist, und/oder
dass der mindestens eine, insbesondere Rundlauffehler des Werkstücks (1) erfassende, Messkopf (10) einen Messfühler (10A/22) aufweist, der an einem mit beidseitig abgestützten Drehgelenken (23) rotierbar gelagerten Messhebel (26) fixiert ist.

10. Richtpresse (20) nach einem der Ansprüche 1 bis 9, **dadurch gekennzeichnet,**
**dass** mindestens zwei im Bereich zwischen den Zentriermitteln des Werkstücks angeordnete, berührend oder berührungslos wirksame Abstandsmesser (10A, 10B) vorgesehen sind, um die Abstände von Oberflächen des Werkstücks von mindestens einem Referenzpunkt zu erfassen,
**dass** die Messpunkte am Werkstück für die mindestens zwei Abstandsmesser in Achsrichtung des Werkstücks in einem, vorzugsweise festen, Abstand (a) von einander angeordnet sind, und
**dass** der axiale Abstand (a) der mindestens zwei Messpunkte voneinander kleiner ist als die Steigung (s1, s2, s3) der jeweiligen Wendel und größer ist als die in Achsrichtung gesehene Breite (b1, b2, b3) der jeweiligen einen Wendel (2).

11. Richtpresse nach einem der Ansprüche 1 bis 10, **dadurch gekennzeichnet,**
**dass** der mindestens eine, Rundlauffehler des Werkstücks erfassende Messkopf einen Messfühler (22) aufweist, der während einer Wendelbewegung nacheinander zumindest mit einem Kernbereich, einem etwaigen Übergangsbereich und einem Wendelbereich an mindestens je einer Werkstück-Kontaktfläche in Anlage gehalten ist und,
**dass** der mindestens eine Messfühler (22) eine Gleitflächen definierende Kontur aufweist, deren Ausrichtung und Neigung sein Übersteigen der Wendel (2) beim Kontakt mit den Werkstück-Kontaktflächen während der Wendelbewegung gestatten.

12. Richtpresse nach einem der Ansprüche 1 bis 11, **dadurch gekennzeic hnet**,
dass der mindestens eine, Rundlauffehler des Werkstücks erfassende Messkopf (10A) einen Messfühler (22) aufweist, der während einer Wendelbewegung mit einem Kernbereich an mindestens je einer Werkstück-Kontaktfläche in Anlage gehalten ist und,
dass der mindestens eine Messfühler (22) bei seiner Annäherung an die Wendel (2) oder bei deren Erreichen kraftbetätigt von der Kontaktfläche abhebbar und auf der gegenüberliegenden Wendelseite wieder auf den Kernbereich aufsetzbar ist.

13. Richtpresse nach einem der Ansprüche 2 bis 12, **gekennzeichnet durch** einen Komparator zum Erfassen des jeweils größten Messsignals der mindestens zwei Abstandsmesser (10A, 10B) in jeder Drehlage des Werkstücks (1). und zum Ergänzen der so erfassten jeweils größten Messsignale beider Messfühler über den Umfang des Werkstücks (1) zu einem virtuellen, über 360° reichenden Sinussignal für den Rundlauffehler des Werkstücks (1)

14. Richtpresse nach einem der Ansprüche 10 bis 13 mit mindestens einem Messfühler zur berührenden Abstandsmessung, **dadurch gekennzeichnet, dass** mindestens einer der Messfühler (22) eine Gleitflächen definierende Kontur aufweist, deren Ausrichtung und Neigung sein Übersteigen der Wendel beim Kontakt mit den Werkstück-Kontaktflächen während der Wendelbewegung gestatten.

15. Richtpresse nach einem der Ansprüche 1 bis 14, **dadurch gekennzeichnet, dass** die entlang des Werkstücks (1) axial voneinander beabstandeten Messpunkte bezogen auf den Umfang des Werkstücks (1) winkelversetzt zueinander, vorzugsweise an einander etwa gegenüberliegenden Seiten der Werkstücks, positioniert sind, wobei der Winkelversatz der Messpunkte insbesondere mehr als 10 Grad, vorzugsweise mehr als 30 Grad, und, besonders bevorzugt, 180 Grad beträgt.

16. Richtpresse nach einem der Ansprüche 1 bis 15, insbesondere nach Anspruch 15, **dadurch gekennzeichnet, dass** der zur Abstandsmessung verfügbare Drehwinkel um die Achse des Werkstücks (1) auf weniger als 360 Grad begrenzt so ist, sodass die Messpunkte die Wendel aussparen, wobei insbesondere der zur Abstandsmessung verfügbare Drehwinkel des Werkstücks (1) mehr als 10 Grad, vorzugsweise mehr als 30 Grad, und besonders bevorzugt mehr als 180 Grad beträgt.

17. Richtpresse nach einem der Ansprüche 1 bis 16, **gekennzeichnet durch** einen Messrechner zum rechnerischen Ergänzen der Kerndurchmesser (Di) des Werkstücks (1) in dem beim Übersteigen der Wendel (2) von dem mindestens einen Messfühler (22) erfassten Winkelbereich des Umfangs des Werkstücks (1).

18. Verwendung einer Richtpresse zum Richten von Rundlauf- oder Geradheitsfehlern an einem lang gestreckten Werkstück, welches mindestens einen, mindestens einen Kerndurchmesser (Di) und mindestens einen Außendurchmesser (Da) des Werkstücks definierenden, mindestens eine Wendel (2) umfassenden Wendelbereich (W1, W2, W3) aufweist, wobei zum Richten eine Richtpresse nach einem der Ansprüche 1 bis 17 verwendet wird.

19. Verfahren zum Richten von Rundlauf- oder Geradheitsfehlern an einem lang gestreckten Werkstück, welches mindestens einen, mindestens einen Kerndurchmesser (Di) und mindestens einen Außendurchmesser (Da) des Werkstücks definierenden, mindestens eine Wendel (2) umfassenden Wendelbereich (W1, W2, W3) aufweist,
wobei das Werkstück innerhalb einer Richtpresse nach einem der Ansprüche 1 bis 17 zentriert wird,
wobei mindestens zwei im Bereich zwischen den Zentriermitteln des Werkstücks angeordnete, berührend oder berührungslos wirksame Abstandsmesser (10A, 10B) die Abstände von Oberflächen des Werkstücks von mindestens einem Referenzpunkt erfassen, und
wobei der axiale Abstand (a) der mindestens zwei Messpunkte voneinander kleiner ist als die Steigung (s1, s2, s3) der jeweiligen Wendel und größer ist als die in Achsrichtung gesehene Breite (b1, b2, b3) der jeweiligen einen Wendel (2).

## Claims

1. Straightening press (20) for straightening concentricity or straightness errors in elongated workpieces,
having centring means (21A, 21B), between which a workpiece (1) can be clamped, which has at least one helical region (W1, W2, W3), such as a screw conveyor, in particular an extruder screw, defining at least one core diameter (Di) and at least one outer diameter (Da) of the workpiece and comprising at least one helix (2), and
having at least one measurement head detecting concentricity errors of the workpiece,
wherein a guide rail (30) arranged approximately parallel to the axis of the workpiece (1) clamped between the centring points (21A, 21B) is provided, and the at least one measurement head (10) has means (32; 32A, 32B) for its displaceability along the guide rail (30),
**characterized in that**
the at least one measurement head (10) and/or its displaceability means (32; 32A, 32B) has at least one control means (40; 40A, 40B), which is designed to maintain a fixed distance (x) between the helix (2) and the measurement point on the workpiece core (1A) during its rotation, and
the at least one displaceable measurement head (10) has a further measurement device (10D), which detects the outer diameter (Da) of the helix (2) at a, preferably fixed, distance from the measurement point on the workpiece core (1A).

2. Straightening press according to Claim 1, **characterized by** a motor-driven guide trolley (32A) as displaceability means (32) of the measurement head (10), and/or by a guide carriage (32B) that can be displaced by a workpiece, in particular by the helix (2), as displaceability means (32) of the measurement head (10).

3. Straightening press according to Claim 1 or 2, **characterized in that** the control means (40) is a synchronizer (40A) acting, for example, as an electrical sequential circuit, and/or **in that** the control means (40) is a mechanical sequential arrangement (40B), such as a driving claw, that acts in particular between the motor-driven helix (2) and a guide carriage (32B) or guide trolley (32A) that can be displaced along the guide rail (30).

4. Straightening press according to one of Claims 1 to 3, **characterized in that** in addition to the measurement head (10) moving away from the workpiece (1), a preferably stationary distance measurement device (measurement device, 10C) is provided, which detects the spindle concentricity on the radial outer diameter (Da) of the workpiece (1), wherein the distance measurement device is preferably a measurement lever or bar (26) for detecting the helical concentricity.

5. Straightening press according to Claim 4, **characterized in that** a device for at least once determining the vector difference of core concentricity and helical concentricity is provided.

6. Straightening press according to Claim 4 or 5, **characterized in that** a device for tracking the current helical concentricity vector is provided, with which the current helical concentricity vector can be tracked during the straightening process or between the straightening processes, in particular continuously during rotation, in particular a 360° rotation of the workpiece (1).

7. Straightening press according to one of Claims 4 to 6, **characterized in that** a device for determining the current core concentricity by means of vector addition of the helical concentricity vector and the difference vector is provided, wherein the device allows the determined current core concentricity data to be transmitted for the straightening processes.

8. Straightening press according to one of Claims 1 to 7, **characterized in that** the at least one measurement head (10) detecting concentricity errors of the workpiece (1) has a sensor (10A, 22), which is preferably approximately prism-shaped, wherein the, in particular prism-shaped, contour of the sensor is oriented in particular at least in sections approximately parallel to the helix (2) of the workpiece (1), and/or
**in that** the at least one measurement head (10) detecting concentricity errors of the workpiece (1) has a sensor (10A/22), which is oriented approximately parallel to the helix (2) of the workpiece (1).

9. Straightening press according to one of Claims 1 to 8, **characterized in that** the at least one measurement head (10) detecting in particular concentricity errors of the workpiece (1) has a sensor (10A/22), which has a bearing suitable for absorbing transverse forces, and/or
**in that** the at least one measurement head (10) detecting in particular concentricity errors of the workpiece (1) has a sensor (10A/22), which is fixed to a measurement lever (26) rotatably mounted with swivel joints (23) supported on both sides.

10. Straightening press (20) according to one of Claims 1 to 9, **characterized in that** at least two distance measurement devices (10A, 10B) are provided that act in a contacting or contactless manner and are arranged between the centring means of the workpiece in order to detect the distances of surfaces of the workpiece from at least one reference point,
**in that** the measurement points on the workpiece for the at least two distance measurement devices are arranged in the axial direction of the workpiece at a, preferably fixed, distance (a) from one another, and
**in that** the axial distance (a) of the at least two measurement points from one another is smaller than the pitch (s1, s2, s3) of the respective helix and larger than the width (b1, b2, b3) of the respective one helix (2) as seen in the axial direction.

11. Straightening press according to one of Claims 1 to 10, **characterized in that** the at least one measurement head detecting concentricity errors of the workpiece has a sensor (22), which, during a helical movement, is held successively in contact at least with a core area, a possible transition area and a helical area on at least one workpiece contact surface in each case, and,
**in that** the at least one sensor (22) has a contour defining sliding surfaces, the orientation and inclination of which allow it to pass over the helix (2) when in contact with the workpiece contact surfaces during the helical movement.

12. Straightening press according to one of Claims 1 to 11, **characterized in that** the at least one measurement head (10A) detecting concentricity errors of the workpiece has a sensor (22), which, during a helical movement, is held in contact with a core area on at least one workpiece contact surface in each case, and,
**in that** the at least one sensor (22) can be lifted off the contact surface by force when it approaches the helix (2) or when it reaches it and can be put down again onto the core area on the opposite side of the helix.

13. Straightening press according to one of Claims 2 to 12, **characterized by** a comparator for detecting the respective largest measurement signal of the at least two distance measurement devices (10A, 10B) in each rotational position of the workpiece (1) and for complementing the respective largest measurement signals from both sensors detected in this way over the circumference of the workpiece (1) to form a virtual sinusoidal signal extending over 360° for the concentricity error of the workpiece (1).

14. Straightening press according to one of Claims 10 to 13 having at least one sensor for distance measurement in a contacting manner, **characterized in that** at least one of the sensors (22) has a contour defining sliding surfaces, the orientation and inclination of which allow it to pass over the helix when in contact with the workpiece contact surfaces during the helical movement.

15. Straightening press according to one of Claims 1 to 14, **characterized in that** the measurement points axially spaced apart from one another along the workpiece (1) are positioned angularly offset from one another with respect to the circumference of the workpiece (1), preferably on approximately opposite sides of the workpiece, wherein the angular offset of the measurement points is more than 10 degrees, preferably more than 30 degrees and, particularly preferably, 180 degrees.

16. Straightening press according to one of Claims 1 to 15, in particular according to Claim 15, **characterized in that** the angle of rotation about the axis of the workpiece (1) available for the distance measurement is limited to less than 360 degrees such that the measurement points leave out the helix, wherein in particular the angle of rotation of the workpiece (1) available for the distance measurement is more than 10 degrees, preferably more than 30 degrees, and particularly preferably more than 180 degrees.

17. Straightening press according to one of Claims 1 to 16, **characterized by** a measuring computer for computationally supplementing the core diameter (Di) of the workpiece (1) in the angular range of the circumference of the workpiece (1) detected by the at least one sensor (22) when passing over the helix (2).

18. Use of a straightening press for straightening concentricity or straightness errors in an elongated workpiece, which has at least one helical region (W1, W2, W3) defining at least one core diameter (Di) and at least one outer diameter (Da) of the workpiece and comprising at least one helix (2), wherein a straightening press according to one of Claims 1 to 17 is used for straightening.

19. Method for straightening concentricity or straightness errors in an elongated workpiece, which has at least one helical region (W1, W2, W3) defining at least one core diameter (Di) and at least one outer diameter (Da) of the workpiece and comprising at least one helix (2),
wherein the workpiece is centred within a straightening press according to one of Claims 1 to 17,
wherein at least two distance measurement devices (10A, 10B) that act in a contacting or contactless manner and are arranged between the centring means of the workpiece detect the distances of surfaces of the workpiece from at least one reference point, and
wherein the axial distance (a) of the at least two measurement points from one another is smaller than the pitch (s1, s2, s3) of the respective helix and larger than the width (b1, b2, b3) of the respective one helix (2) as seen in the axial direction.

## Revendications

1. Presse à dresser (20) pour le dressage de faux-ronds ou de défauts de rectitude sur des pièces de forme allongée,
avec des moyens de centrage (21A, 21B) entre lesquelles une pièce (1) peut être serrée, laquelle comporte au moins une zone spiralée (W1, W2, W3) définissant au moins un diamètre de noyau (Di) et au moins un diamètre extérieur (Da) de la pièce, comprenant au moins une spire (2), comme une vis sans fin transporteuse notamment une vis sans fin d'extrudeuse, et
avec au moins une tête de mesure saisissant des faux-ronds de la pièce,
sachant qu'un rail de guidage (30) disposé à peu près parallèlement à l'axe de la pièce (1) serrée entre les pointes de centrage (21A, 21B) est prévu et au moins une tête de mesure (10) comporte des moyens (32, 32A, 32B) pour la mobilité de celle-ci le long du rail de guidage (30),
**caractérisée en ce qu'**
au moins une tête de mesure (10) et/ou son moyen de mobilité (32, 32A, 32B) comporte au moins un moyen de commande (40, 40A, 40B), qui est configuré pour maintenir une distance fixe (x) entre la spire (2) et le point de mesure sur le noyau de pièce (1A) pendant la rotation de celle-ci, et
**en ce qu'**au moins une tête de mesure (10) mobile comporte un autre dispositif de mesure (10D), qui saisit le diamètre extérieur (Da) de la spire (2) à une distance de préférence fixe du point de mesure sur le noyau de pièce (1A).

2. Presse à dresser selon la revendication 1, **caractérisée par** un chariot de guidage (32A) entraîné par un moteur en tant que moyen de mobilité (32) de la tête de mesure (10) et/ou par coulisseau de guidage (32B) déplaçable par une pièce, en particulier par la spire (2) en tant que moyen de mobilité (32) de la tête de mesure (10).

3. Presse à dresser selon la revendication 1 ou 2, **caractérisée en ce que** le moyen de commande (40) est par ex. un synchronisateur (40A) agissant en tant que circuit séquentiel électrique et/ou **en ce que** le moyen de commande (40) est un système séquentiel (40B) mécanique, actif notamment entre la spire (2) entraînée par moteur et un coulisseau de guidage (32B) ou chariot de guidage (32A) mobile le long du rail de guidage (30), comme une griffe d'entraînement.

4. Presse à dresser selon l'une quelconque des revendications 1 à 3, **caractérisée en ce qu'**en complément de la tête de mesure (10) parcourant la pièce (1), un distancemètre de préférence stationnaire (système de mesure, 10C) est prévu, qui saisit la concentricité de broche sur le diamètre extérieur radial (Da) de la pièce (1), sachant que le distancemètre est de préférence un levier ou barre de mesure (26) pour la saisie de la concentricité de spire.

5. Presse à dresser selon la revendication 4, **caractérisée en ce qu'**un dispositif pour la détermination au moins unique de la différence vectorielle de concentricité de noyau et de concentricité de spire.

6. Presse à dresser selon la revendication 4 ou 5, **caractérisée en ce qu'**un dispositif de suivi du vecteur réel de concentricité de spire est prévu avec lequel le vecteur réel de concentricité de spire peut être suivi lors de l'opération de dressage ou entre les opérations de dressage, notamment de façon constante pendant la rotation, en particulier d'une rotation à 360° de la pièce (1).

7. Presse à dresser selon l'une quelconque des revendications 4 à 6, **caractérisée en ce qu'**un dispositif de détermination de la concentricité de noyau réel au moyen d'addition vectorielle à partir du vecteur de concentricité de spire et du vecteur différentiel est prévu, sachant que le dispositif permet la transmission des données de concentricité de noyau réelles déterminées pour les opérations de dressage.

8. Presse à dresser selon l'une quelconque des revendications 1 à 7, **caractérisée en ce qu'**au moins la tête de mesure (10) saisissant un faux-rond de la pièce (1) comporte un palpeur de mesure (10A, 22), qui est de préférence à peu près de forme prismatique, sachant que le contour, en particulier prismatique du palpeur de mesure est notamment au moins par endroits orienté à peu près parallèlement à la spire (2) de la pièce (1), et/ou
**en ce qu'**au moins une tête de mesure (10) saisissant des faux-ronds de la pièce (1) comporte un palpeur de mesure (10A/22), qui est orienté à peu près parallèlement à la spire (2) de la pièce (1).

9. Presse à dresser selon l'une quelconque des revendications 1 à 8, **caractérisée en ce qu'**au moins une tête de mesure (10) saisissant en particulier des faux-ronds de la pièce (1) comporte un palpeur de mesure (10A/22), qui comporte un support adapté pour absorber des forces transversales, et/ou
**en ce qu'**au moins une tête de mesure (10) saisissant en particulier des faux-ronds de la pièce (1) comporte un palpeur de mesure (10A/22), qui est fixé à un levier de mesure (26) logé pouvant tourner avec des articulations rotatives (23) soutenues des deux côtés.

10. Presse à dresser (20) selon l'une quelconque des revendications 1 à 9, **caractérisée en ce qu'** au moins deux distancemètres (10A, 10B) disposés à proximité entre les moyens de centrage de la pièce, actifs par contact ou sans contact sont prévus pour saisir les distances des surfaces de la pièce d'au moins un point de référence,
**en ce que** les points de mesure sur la pièce pour au moins deux distancemètres sont disposés en direction axiale de la pièce à une distance de préférence fixe (a) l'un de l'autre, et
**en ce que** la distance axiale (a) d'au moins deux points de mesure l'un par rapport à l'autre est plus petite que le pas (s1, s2, s3) de la spire respective et est plus grande que la largeur vue en direction axiale (b1, b2, b3) d'une spire respective (2).

11. Presse à dresser selon l'une quelconque des revendications 1 à 10, **caractérisée en ce qu'** au moins une tête de mesure saisissant des faux-ronds de la pièce comporte un palpeur de mesure (22), qui est maintenu en appui pendant une course de spire l'une après l'autre au moins avec une zone de noyau, une zone de transfert quelconque et une zone spiralée à chaque fois sur au moins une surface de contact de pièce, et
**en ce qu'**au moins un palpeur de mesure (22) comporte un contour définissant une surface de glissement dont l'orientation et l'inclinaison permettent son franchissement de spires (2) lors du contact avec les surfaces de contact de la pièce pendant la course de spire.

12. Presse à dresser selon l'une quelconque des revendications 1 à 11, **caractérisée en ce qu'**
au moins une tête de mesure (10A) saisissant des faux-ronds de la pièce comporte un palpeur de mesure (22), qui est maintenu en appui pendant une course de spire avec une zone de noyau sur au moins chaque surface de contact de pièce, et
**en ce qu'**au moins un palpeur de mesure (22) peut être enlevé par force de la surface de contact lors de son approche sur la spire (2) ou lors de l'atteinte de celle-ci et peut être à nouveau posé sur le côté de spire opposé sur la zone de noyau.

13. Presse à dresser selon l'une quelconque des revendications 2 à 12, **caractérisée par** un comparateur pour saisir le signal de mesure respectivement le plus grand d'au moins deux distancemètres (10A, 10B) dans chaque position de rotation de la pièce (1) et pour compléter les signaux de mesure respectivement les plus grands ainsi saisis de deux palpeurs de mesure sur la périphérie de la pièce (1) pour un signal sinusoïdal virtuel portant sur 360° pour les faux-ronds de la pièce (1) .

14. Presse à dresser selon l'une quelconque des revendications 10 à 13 avec au moins un palpeur de mesure pour la mesure de distance avec contact, **caractérisée en ce qu'**au moins un des palpeurs de mesure (22) comporte un contour définissant des surfaces de glissement, dont l'orientation et l'inclinaison permettent son franchissement de la spire lors du contact avec la surface de contact de la pièce pendant la course de la spire.

15. Presse à dresser selon l'une quelconque des revendications 1 à 14, **caractérisée en ce que** les points de mesure à distance axialement les uns des autres le long de la pièce (1) sont positionnés en décalage angulaire l'un par rapport à l'autre, de préférence sur les côtés de la pièce légèrement opposés l'un de l'autre, en référence à la périphérie de la pièce (1), sachant que le déport angulaire des points de mesure est notamment de plus de 10 degrés, de préférence de plus de 30 degrés, en particulier de préférence de 180 degrés.

16. Presse à dresser selon l'une quelconque des revendications 1 à 15, en particulier selon la revendication 15, **caractérisée en ce que** l'angle de rotation disponible pour la mesure de distance autour de l'axe de la pièce (1) est limité à moins de 360 degrés de telle sorte que les points de mesure évitent la spire, sachant notamment que l'angle de rotation de la pièce (1) disponible pour la mesure de distance est de plus de 10 degrés, de préférence de plus de 30 degrés et en particulier de préférence de plus de 180 degrés.

17. Presse à dresser selon l'une quelconque des revendications 1 à 16, **caractérisée par** un calculateur de mesure pour le complément numérique des diamètres de noyau (Di) de la pièce (1) dans la zone angulaire de la périphérie de la pièce (1), saisie lors du franchissement de la spire (2) par au moins un palpeur de mesure (22).

18. Utilisation d'une presse à dresser pour dresser des faux-ronds ou défauts de rectitude sur une pièce de forme allongée, laquelle comporte au moins une zone spiralée (W1, W2, W3) définissant au moins un diamètre de noyau (Di) et au moins un diamètre extérieur (Da) de la pièce, comprenant au moins une spire (2), sachant que pour dresser une presse à dresser selon l'une quelconque des revendications 1 à 17 est utilisée.

19. Procédé de dressage de faux-ronds ou de défauts de rectitude sur une pièce de forme allongée, laquelle comporte au moins une zone spiralée (W1, W2, W3) définissant au moins un diamètre de noyau (Di) et au moins un diamètre extérieur (Da) de la pièce, comprenant au moins une spire (2),
sachant que la pièce est centrée à l'intérieur d'une presse à dresser selon l'une quelconque des revendications 1 à 17,
sachant au moins que deux distancemètres (10A, 10B) actifs avec ou sans contact, disposés entre les moyens de centrage de la pièce saisissent les distances des surfaces de la pièce d'au moins un point de référence, et
sachant que la distance axiale (a) d'au moins deux points de mesure est plus petite entre eux que le pas (s1, s2, s3) de la spire respective et est plus grande que la largeur (b1, b2, b3) vue en direction axiale d'une spire respective (2).
